Europäisches Patentamt

European Patent Office

Office européen des brevets

(11) Veröffentlichungsnummer: **0 288 925**
**A2**

(12) # EUROPÄISCHE PATENTANMELDUNG

(21) Anmeldenummer: 88106484.4

(51) Int. Cl.4: **B65D 85/52**

(22) Anmeldetag: 22.04.88

(30) Priorität: 27.04.87 US 42918

(43) Veröffentlichungstag der Anmeldung:
02.11.88 Patentblatt 88/44

(84) Benannte Vertragsstaaten:
AT BE CH DE ES FR GB IT LI NL SE

(71) Anmelder: Fischer GmbH & Co. KG

D-5411 Hillscheid(DE)

(72) Erfinder: Groth, Ernst T.
839 Birdie Way, Apollo Beach
Florida 33570(US)
Erfinder: Kruesi, Lukas T.
Neuweg 5
D-7889 Wyhlen(DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
D-4000 Düsseldorf 11(DE)

(54) Behälter zur Aufbewahrung von Pflanzen.

(57) Die Erfindung geht aus von einem Behälter zur Aufbewahrung von Pflanzen, insbesondere für Versandzwecke, mit Kammern zur Aufnahme von Wurzelballen, die mit Öffnungen versehen sind, durch welche die bereits entwickelten Blatteile der Pflanzen ragen. Um einen Behälter zur Aufbewahrung von Pflanzen zu schaffen, der sich zur Aufnahme einer großen Anzahl von Pflanzen eignet, ohne daß die bereits entwickelten Pflanzenteile zu dicht gepackt sind und sich gegenseitig behindern, so daß ein Versand von jungen Pflanzen ohne Beschädigungen infolge von Erschütterungen und Stößen des Behälters möglich ist, wird mit der Erfindung vorgeschlagen, daß die Kammern sich parallel zum Behälterboden derart erstrecken, daß die Pflanzen in liegender Position gehalten sind.

FIG. I.

## Behälter zur Aufbewahrung von Pflanzen

Die Erfindung geht aus von einem Behälter zur Aufbewahrung von Pflanzen, insbesondere für Versandzwecke, mit Kammern zur Aufnahme von Wurzelballen, die mit Öffnungen versehen sind, durch welche die bereits entwickelten Blatteile der Pflanzen ragen.

Behälter zur Aufbewahrung von Pflanzen sind bereits in einer Vielzahl von Ausführungsformen bekannt. Zumeist sind die Jungpflanzen jedoch mit zuviel Spielraum im Behälter untergebracht, wodurch es zu starken Bewegungen der Pflanzen und zu dadurch bedingten Beschädigungen der Pflanzen insbesondere während des Versandes kommen kann. Andere Behälter lassen den Blatteilen der Pflanzen zwar nur geringen Spielraum, so daß mechanische Beschädigungen weitgehend vermieden werden, jedoch schränken sie auf diese Weise ebenfalls die Luftzirkulation innerhalb des Behälters ein, so daß der notwendige Luftaustausch an den Blatteilen der Pflanzen nicht gewährleistet ist.

Viele Versandbehälter sind auch dann von geringem Wert, wenn es darum geht, ein Erfrieren der Pflanzen während des Versandes bei kaltem Wetter bzw. eine übermäßige Beanspruchung der Pflanzen bei großer sommerlicher Hitze und Feuchtigkeit zu verhindern.

Die beschriebenen Probleme haben sich durch die Art des zu versendenden Pflanzenmaterials in den letzten Zeit noch vergrößert. Jungpflanzen, bei denen es sich um Wurzelschnitte, Pflanzeinlagen, Setzlinge oder Keilschnitte handelt, werden bis zu einer Größe von etwa 5 bis 7,5 cm in einem Nährboden aufgezogen. Zur Erleichterung des anschließenden Umpflanzens der Jungpflanzen in größere Behälter von beispielsweise 10 cm Topfdurchmesser weisen die Wurzeln oder Wurzelballen gewöhnlich die Form eines Keils auf oder sind anderweitig konisch geformt. Zum Versand dieser Keilschnitte werden spezielle Behälter mit Steckfassungen verwendet, deren Herstellung jedoch aufwendig ist und die, bezogen auf die Größe des Behälters, nur eine kleine Menge an Jungpflanzen aufnehmen können.

In den bekannten Behältern werden die Junpflanzen aufrecht stehend aufbewahrt. Dies ist zwar für das Wachstum der Pflanzen die beste Anordnung, bedingt jedoch einen stets aufrechten Versand des Behälters, um ein Abschütteln des an den Wurzeln haftenden Nährbodens, ein Freilegen der feinen Wurzelstränge und eine Schädigung des Laubes zu verhindern. Eine stets aufrechte Lage des Behälters während des Versandes ist jedoch in der Praxis nicht sicherzustellen.

Der Erfindung liegt die **Aufgabe** zugrunde, einen Behälter zur Aufbewahrung von Pflanzen zu - schaffen, der sich zur Aufnahme einer großen Anzahl von Pflanzen eignet, ohne daß die bereits entwickelten Pflanzenteile zu dicht gepackt sind und sich gegenseitig behindern, so daß ein Versand von jungen Pflanzen ohne Beschädigungen infolge von Erschütterungen und Stößen des Behälters möglich ist.

Die **Lösung** dieser Aufgabe ist dadurch gekennzeichnet, daß die Kammern sich parallel zum Behälterboden derart erstrecken, daß die Pflanzen in liegender Position gehalten sind.

Der Behälter gemäß der Erfindung bietet den **Vorteil**, eine große Anzahl von Pflanzen aufnehmen zu können, ohne daß die bereits entwickelten Blatteile der Pflanzen zu dicht gepackt sind und sich gegenseitig behindern. Der Behälter eignet sich insbesondere für Versandzwecke, wobei Beschädigungen infolge von Erschütterungen und Stößen des Behälters während des Versandes vermieden werden.

Die Anzahl der aufzubewahrenden Pflanzen läßt sich noch erhöhen, wenn entsprechend einem weiteren Merkmal der Erfindung die Pflanzen in einander benachbarten Kammern in entgegengesetzter Richtung angeordnet sind.

Werden außerdem in jeder Kammer zwei Wurzelballen in einander entgegengesetzter Richtung angeordnet, so ist eine besonders große Packungsdichte der Wurzelballen zu erreichen, ohne daß sich dadurch die Gefahr von Beschädigungen an den Wurzeln erhöht.

Entsprechend einem weiteren Merkmal der Erfindung können zwei oder auch mehr Reihen von Kammern mit Abstand parallel zueinander in einer Ebene vorgesehen sein.

Von Vorteil ist es, die Kammern durch Trennelemente zu bilden, die auf dem die Kammern an ihrer Unterseite abschließenden Behälterboden angeordnet und oberseitig durch einen Behälterdeckel geschlossen sind. Auf diese Weise läßt sich ein vollkommen geschlossener, die Pflanzen sicher aufbewahrender Behälter bereits aus zwei Einzelteilen zusammensetzen.

Zur Unterbringung mehrerer Schichten von Pflanzen in einem gemeinsamen Behälter sind gemäß weiterer Merkmale die Kammern durch Trennelemente gebildet, die auf einem die Kammern an ihrer Unterseite abschließenden Steg angeordnet sind. An ihrer Oberseite sind die Kammern entweder durch einen Behälterdeckel oder durch einen darüberliegenden Steg geschlossen, wobei die Stege an stapelbaren Rahmen befestigt sind.

Bei einer Ausgestaltung der Erfindung sind die Rahmen an ihrer Oberseite durch den Behälterdeckel und an ihrer Unterseite durch den Behälterboden abgeschlossen. Dadurch ist ein System geschaffen, das sich durch einfaches Aufstecken weiterer Rahmen beliebig der Zahl der aufzubewahrenden Pflanzen anpassen läßt. Trotz der dichten Anordnung der Pflanzen untereinander ist eine Luftzirkulation durch die zwischen den Stegen befindlichen freien Bereiche möglich. Bevor die Rahmen aufeinander gestapelt werden, ist eine Begasung oder Besprühung der Pflanzen möglich.

Zur sicheren Verbindung des Behälterbodens mit den Rahmen und dem Behälterdeckel eignet sich besonders eine Verbindung über Federn und Nuten.

Um keilförmige Wurzelschnitte allseitig sicher zu umschließen, wird gemäß einer weiteren Ausgestaltung der Erfindung vorgeschlagen, daß die Trennelemente S-oder T-förmig ausgebildet sind und ihre freien Enden seitliche Kammerbegrenzungen unter Bereitstellung von einander gegenüberliegend angeordneten Öffnungen für den Durchtritt der Blatteile der Pflanzen bilden.

Zur Aufrechterhaltung konstanter Temperaturbedingungen innerhalb des Behälters wird weiterhin vorgeschlagen, zwischen dem Behälterboden und dem Steg des darüberliegenden Rahmens Mittel zur Kontrolle der Temperatur anzuordnen. So kann beispielsweise bei sommerlichem Klima mit großer Hitze und Feuchtigkeit Trockeneis eingelegt werden oder, im Falle starker Kälte, zusätzliches Isolationsmaterial eingesetzt werden, um auf diese Weise Pflanzen besonders zu schützen. Der Raum zwischen dem Behälterboden und dem Steg des darüberliegenden Rahmens eignet sich auch zur Aufnahme von Kennzeichnungsetiketten oder Anweisungen, die auf diese Weise zusammen mit den Pflanzen verfügbar sind.

Alle Bestandteile des Behälters sind vorzugsweise aus Polystyrol geformt. Dies ermöglicht eine preiswerte Formungstechnik und dadurch verringerte Herstellkosten. Davon abgesehen können jedoch auch andere geeignete Kunststoffmaterialien zur Anwendung kommen oder andere Materialien. Die mit den Pflanzen bestückten Rahmen sind, sofern sie aus Kunststoff bestehen, vorzugsweise als Ganzes geformt, so daß die mit den Trennelementen versehenen Stege eine Einheit mit den Rahmen bilden.

Der Behälter läßt eine große Variationsbreite der aufzunehmenden Pflanzen zu. Die Abmessungen der einzelnen Rahmen können in der gewünschten Weise verändert werden, außerdem kann durch einen entsprechenden Abstand der Stege voneinander und von den Seitenwänden das jeweilige Stadium des Pflanzenwachstums berücksichtigt werden, so daß eine Beschädigung der Pflanzen während des Verpackens und beim Versand vermieden wird.

Weitere Einzelheiten und Vorteile des Gegenstandes der Erfindung ergeben sich aus der nachfolgenden Beschreibung der zugehörigen Zeichnungen, in denen eine bevorzugte Ausführungsform eines Behälters dargestellt ist. In dem Zeichnungen zeigen:

Fig. 1 eine perspektivische Ansicht eines aus einem Behälterboden und zwei darüberliegenden Rahmen aufgebauten Behälters zur Aufbewahrung von Jungpflanzen;

Fig. 2 eine ausschnittsweise Draufsicht auf den Behälter nach Fig. 1;

Fig. 3 eine perspektivische Aufsicht eines Rahmens mit zwei Stegen;

Fig. 4 einen Teilschnitt durch einen Behälter zur Aufbewahrung von Pflanzen.

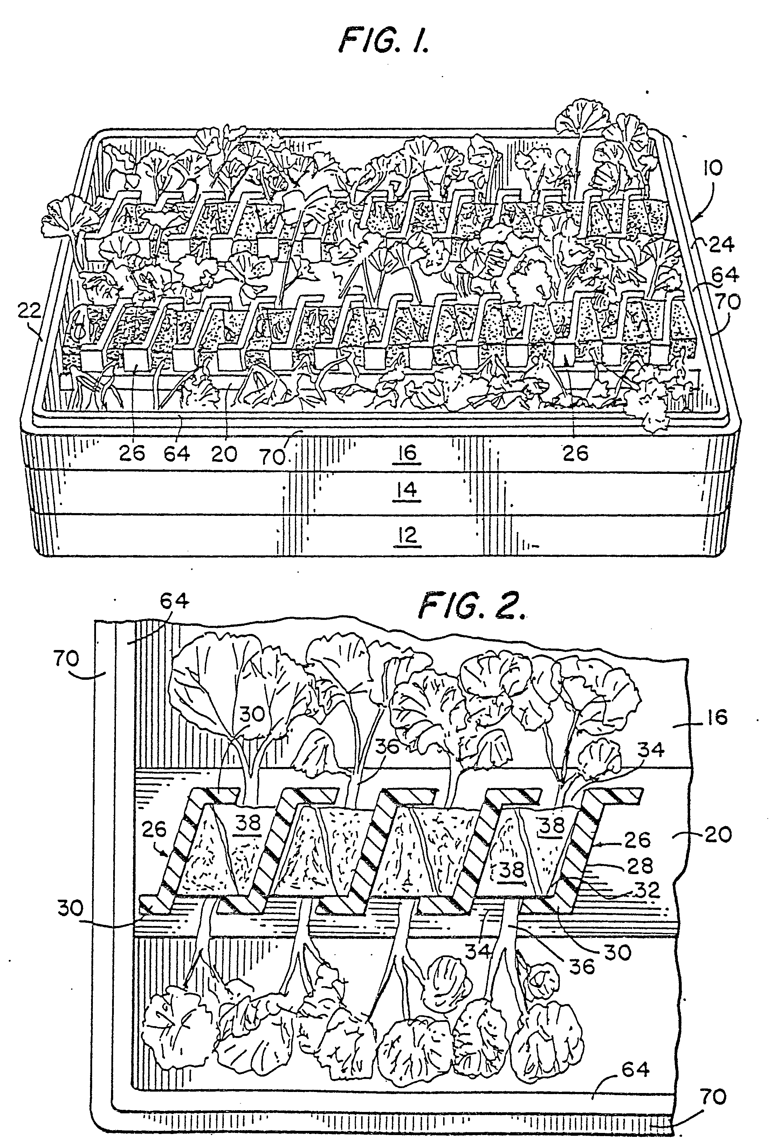

Der in der Fig. 1 dargestellte Behälter 10 zur Aufbewahrung von Pflanzen besteht aus einem Behälterboden 12, einem ersten oder unteren, Pflanzen aufnehmenden Rahmen 14 und einem oberen, Pflanzen aufnehmenden Rahmen 16. Vor der Fertigstellung des Behälters 10 zum Versand wird ein Behälterdeckel 18 auf den oberen Rahmen 16 aufgesetzt und mit diesem verbunden.

In Fig. 1 ist nur der obere Rahmen 16 mit Pflanzen versehen dargestellt, obwohl der Rahmen 14 in gleicher Weise bestückt ist. Der obere Rahmen 16 ist mit einem Paar längsverlaufender Stege 20 versehen, von denen einer sowohl in Fig. 1 als auch in Fig. 2 dargestellt ist. Die Stege 20 sind als Einheit mit Begrenzungswänden 22 und 24 des Rahmens 16 verbunden. Am Steg 20 ist eine Mehrzahl von S-förmigen Trennelementen 26 ausgeformt, die sich mit Abstand von dem Steg 20 nach oben weg erstrecken. Jedes S-förmige Trennelement 26 besteht aus einem länglichen, zentralen Trennsteg 28 sowie Enden 30, die sich in entgegengesetzten Richtungen vom Trennsteg 28 weg erstrecken. Benachbart angeordnete S-förmige Trennelemente 26, wie sie in Fig. 2 dargestellt sind, begrenzen eine in erster Linie die Form eines Parallelogramms aufweisende Kammer 32, die bis auf beiderseitige Öffnungen 34, durch welche die Pflanzenstengel ragen können, geschlossen ist.

In Fig. 2 sind wurzelballen 38 dargestellt, von denen sich ein Paar in jeder Kammer 32 befindet. Die Wurzelballen 38 oder Nährböden sind in Form eines Keiles mit in erster Linie dreiecksförmigem Querschnitt ausgeführt. Wenn sie in der in Fig. 2 dargestellten Weise paarweise zusammengefügt werden, bilden sie einen viereckigen Querschnitt und sind dicht aneinanderliegend in die Kammern 32 eingefügt. Die keilförmigen Wurzelballen 38 werden bodenseitig durch den Steg 20, seitlich und an ihren Enden mit Ausnahme der Öffnungen 34 für die Pflanzenstengel durch die S-förmigen Trennelemente 26 und stirnseitig durch die Oberfläche des Behälterdeckels 18 oder, sofern ein Pflanzenrahmen darüber gesetzt ist, durch die untere Stirnfläche des darüberliegenden Steges 20 umschlossen. Durch die dicht aneinanderliegende Einfügung der keilförmigen Wurzelbal len 38 sind diese relativ unempfindlich gegen die beim Versand von Behältern auftretenden Stöße und Erschütterungen.

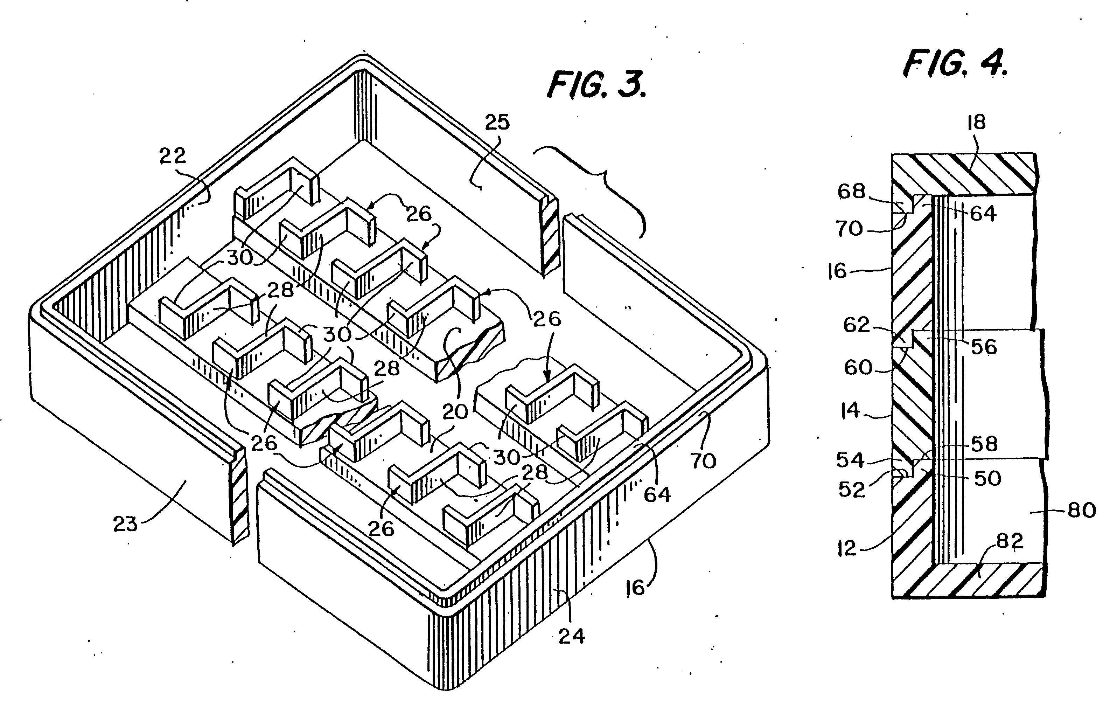

Aus Fig. 3 ist zu erkennen, daß der Rahmen 16 zusätzlich zu den bereits beschriebenen Begrenzungswänden 22 und 24 noch Seitenwände 23 und 25 aufweist. Alle Wände 22,24,23 und 25 zusammen bilden einen Hohlraum.

Der Steg 20 erstreckt sich zwischen den Begrenzungswänden 22 und 24, wobei die bodenseitigen Stirnflächen der Stege 20 bevorzugt in der gleichen Ebene liegen wie die unteren Stirnseiten der den Rahmen 16 umfassenden Wände 22,24,23,25. Ebenso kann sich der Steg 20 auch quer verlaufend zwischen den Seitenwänden 23 und 25 erstrecken. Dies kann dann erwünscht sein, wenn die Biegefestigkeit der Stege 20 in Längsrichtung bei Belastung zu gering ist. Eine Variation der Länge und der Breite des Rahmens 16 ist ebenfalls möglich, außerdem kann die Größe und die Anzahl der Stege 20 in Abhängigkeit von den zu versendenden Pflanzen variieren.

Die Trennelemente 26 sind so hoch, daß sie bis etwa in die Ebene der unteren Stirnseite der Wände 22,24,23,25 ragen. Auf diese Weise liegen, wenn die Rahmen 14,16 übereinander geschichtet sind, die nach unten gerichteten Flächen der Stege 20 in unmittelbarer Nähe zu den oberen Stirnflächen der S-förmigen Trennelemente 26, wodurch jede Kammer 32 weitgehend geschlossen ist.

Das Zusammensetzen der einzelnen Rahmenelemente wird durch Feder-und Nutverbindungen bewerkstelligt, die sich an der Oberseite und der Unterseite der Wände 22,24,23,25 befinden. In Fig. 4 ist dargestellt, daß der Behälterboden 12 an seiner Oberseite mit einer umlaufenden Feder 50 versehen ist und außerhalb der Feder 50 eine davon abgesetzte Nut 52 eingearbeitet ist. Der andere Rahmen 14 ist in ähnlicher Weise mit Federn 54 und 56 an der Unter-und Oberseite versehen sowie mit entsprechenden Nuten 58 und 60. Der obere Rahmen 16 verfügt in der beschriebenen Ausführungsform über eine untere Feder 62, welche in die Nut 60 eingreift und eine obere, innen verlaufende Feder 64. Der Behälterdeckel 18 verfügt über eine außen verlaufende Feder 68, welche in eine Nut 70 ragt, wenn der Behälterdeckel 18 zum Verschließen des Behältes 10 aufgesetzt ist. Auf diese Weise greift jeder einzelne Rahmen fest in den darunterliegenden Rahmen ein. Der Behälterdeckel 18 greift fest in den oberen Rahmen 16 ein. Durch diese zusammensetzbare Anordnung, unterstützt durch die Verwendung von Kunststoffmaterial, vorzugsweise Polystyrol, für die verschiedenen Komponenten wird ein auch extremen Temperaturausschlägen widerstehender Behälter geschaffen.

Zur Verbesserung der Konstanthaltung der Temperatur im Behälter 10 ist ein Hohlraum 80 im Behälterboden 12 oberhalb der Bodenwand 82 vorgesehen. Das Volumen dieses Hohlraum 80 entspricht in etwa dem Raum, der durch die Wände 22,24,23,25 der Rahmen 14 oder 16 ohne die durch die Stege 20 und die S-förmigen Trennelemente 26 eingenommenen Volumina · eingeschlossen ist. In den Hohlraum 80 können geeignete Mittel zur Konstanthaltung der Temperatur eingesetzt werden. Beispielsweise können bei großer Hitze Trockeneisbehälter oder ähnliche Kältemittel in den Hohlraum 80 eingesetzt werden. Bei kaltem Wetter kann zusätzliches Isolationsmaterial in den Hohlraum 80 eingefügt werden. Zusätzlich kann der Hohlraum 80 mit einer Tasche oder Kammer versehen sein, in der sich Bezeichnungen der versendeten Pflanzen oder Anweisungen zu deren Aufzucht befinden. Auf diese Weise ist es dem Benutzer eher möglich, für jede einzelne Pflanze einen Etikettanhänger oder einen Hinweis beizulegen, da diese normalerweise später in einen größeren Behälter umgetopft werden.

Obwohl der Behälterdeckel 18 in der dargestellten Form relativ flach und der Behälterboden 12 relativ tief gebaut ist, können diese dennoch miteinander vertauscht werden. Der Behälter deckel 18 kann den Unterbau bilden und der Behälterboden 12 als Abdeckung dienen. In diesem Fall befinden sich die Mittel zur Konstanthaltung der Temperatur knapp unterhalb der Abdeckung, also gegenüberliegend dem am Boden angeordneten Hohlraum 80 entsprechend Fig. 4.

Der in Fig. 3 dargestellte Rahmen wird mit Pflanzeinlagen oder mit mit Wurzelballen 38 versehenen Pflanzen in der besschriebenen Weise gefüllt. Die Kammer 32 zwischen benachbarten S-förmigen Trennelementen 26 ist nahezu vollständig mit Wurzelmasse gefüllt, wobei die Stengel der Pflanzen seitlich oder horizontal in einander entgegengesetzten Richtungen aus den Öffnungen 34 jeder Kammer 32 herausragen. Ist der Rahmen vollständig mit Pflanzen gefüllt, wie dies in Fig. 1 dargestellt ist, so wird der Rahmen auf den Behälterboden 12 mittels der Feder-Nut-Verbindung aufgesteckt, wie in Fig. 4 dargestellt. Anschließend wird ein weiterer Rahmen gefüllt und in gleicher Weise über die Feder-Nut-Verbindung auf den ersten Rahmen aufgesetzt. Sind nur zwei mit Pflanzen gefüllte Rahmen 14,16 in Benutzung, so wird der Behälterdeckel 18 dann auf den oberen Rahmen 16 aufgesetzt. Der Behälter 10 ist damit versandfertig. In der Regel werden Gurte, Bänder, Schnüre oder ähnliches um den fertig zusammengesetzten Behälter 10 gewickelt, um ein Lösen der Einzelteile zu verhindern. Vor dem Aufsetzen des untersten Rahmens 14 werden geeignete Mittel zur Konstanthaltung der Temperatur innerhalb des Behälters in den Hohlraum 80 des Behälterbodens 12 eingesetzt. Werden der Behälterboden 12 und der Behälterdeckel 18 in der beschriebenen Weise vertauscht, so werden die Mittel zur Konstanthaltung der Temperatur in der Abdeckung 12 untergebracht, bevor diese auf den obersten, mit Pflanzen versehenen Rahmen 16 aufgesetzt wird, wobei die Abdeckung 12 dann die Funktion des Behälterdeckels übernimmt.

Durch Einsetzen der keilförmigen Wurzelballen 38 zwischen die S-förmigen Trennelemente 26 wird der zur Verfügung stehende Raum innerhalb der Kammer 32 maximal ausgenutzt. Da die Pflanzenstengel und die noch gering entwickelten Blätter horizontal aus den durch die S-förmigen Trennelemente 26 geformten Kammern herausragen, kann die vertikale Ausdehnung der die Pflanzen aufnehmenden Rahmen 14,16 im Vergleich zu herkömmlichen Behältern, in denen Pflanzen vertikal angeordnet sind, beträchtlich verringert werden. Jeder mit Pflanzen versehene Rahmen 14,16 kann, nachdem er mit jungen Pflanzen gefüllt ist, auf - schnelle Weise entweder auf dem Behälterboden 12 befestigt werden oder auf einem bereits mit Pflanzen versehenen, auf den Behälterboden 12 aufgesteckten Rahmen.

Die offene Gestaltung der mit Planzen versehenen Rahmen 14,16 erlaubt eine Luftzirkulation innerhalb der Rahmen 14,16 während des Auffüllens und eine freie Luftzirkulation innerhalb des Behälters 10, wenn dieser geschlossen ist. Auf diese Weise wird ein Stagnieren des Pflanzenwachstums während des Versandes verhindert und ein kontinuierlicher Wachstumsprozeß sichergestellt. Werden die Stege 20 so im Pflanzen aufnehmenden Rahmen 16 angeordnet, daß die bodenseitigen Flächen der Stege 20 sich in unmittelbarer Nähe der nach oben gerichteten Flächen der S-förmigen Trennelemente 26 des darunterliegenden Rahmens 14 befinden, so erhält man eine relativ gut geschlossene Kammer 32 für jedes Paar von Setzlingen, wodurch ein Auseinanderfallen oder Wegbrechen des Nährbodens oder der Wurzelballen 38 während des Versandes verhindert wird. Erreicht der Versandbehälter seinen Bestimmungsort, so können die Pflanzen schnell und leicht herausgenommen und in größere Behälter für den weiteren Wachstumsprozeß umgesetzt werden.

Sämtliche Einzelteile des Behälters 10 sind vorzugsweise aus Polystyrol hergestellt. Polystyrol bietet eine ausreichende Festigkeit gegen ein Brechen während der Benutzung und ermöglicht eine Wiederverwendung der Rahmen 14,16, des Behälterbodens 12 und des Behälterdeckels 18. Die sich aus den Wänden 22,24,23,25, den Stegen 20 und den S-förmigen Trennelementen 26 zusammensetzenden Rahmen 14,16 sind vorzugsweise einteilig geformt, obwohl andere Möglichkeiten der Befestigung der Stege 20 an den Rahmen 14,16 und der S-förmigen Trennelemente 26 an den Stegen 20 je nach den geforderten Eigenschaften möglich sind. Obwohl zwei Stege 20 dargestellt sind, kann selbstverständlich auch nur ein Steg oder es können mehr als zwei Stege zur Anwendung gelangen. Dies hängt von der Art des zu versendenden Pflanzenmaterials sowie von der Form und den Abmessungen ab.

Ein Festhalten der Pflanzen ist auch durch andere Ausbildungen als die dargestellten S-förmigen Trennelemente 26 möglich. Es können auch Trennelemente in Form eines T verwendet werden, wobei jedes nächste Trennelement umgekehrt angeordnet ist und eine in erster Linie rechteckige Kammer zur Aufnahme der Wurzelballen entsteht. Die Trennelement werden dazu mit einem Abstand auf dem Steg angeordnet, der der Größe der zu versendenden Setzlinge entspricht. Außerdem werden seitliche Öffnungen freigelassen, durch welche die Pflanzenstengel ragen. Das Ziel, die gesamten Wurzelballen in einer in erster Linie geschlossenen Kammer unterzubringen, würde auch auf diese Weise erreicht.

Es können auch andere Materialien als Polystyrol zur Anwendung kommen, beispielsweise andere Kunststoffe, welche die geforderten Gebrauchseigenschaften aufweisen. Auch das Zusammenfügen der Rahmen könnte in geringfügig anderer Weise geschehen. So kann die nach oben weisende Feder statt an der Innenseite an der Außenseite der jeweiligen Wand angeordnet sein. Es könnte auch eine zentral angeordnete Feder in der oberen Stirnseite jedes Rahmens und eine zentral angeordnete Nut in der unteren Stirnseite jedes Rahmens vorgesehen sein. Auch dann erhält man eine relativ feste Verbindung zwischen den übereinander angeordneten Rahmen.

**Bezugszeichenliste**

10 Behälter
12 Behälterboden
14 unterer, Pflanzen aufnehmender Rahmen
16 oberer, Pflanzen aufnehmender Rahmen
18 Behälterdeckel
20 Steg
22 Begrenzungswand
23 Seitenwand
24 Begrenzungswand
25 Seitenwand
26 S-förmiges Trennelement

28 Trennsteg
30 Enden
32 Kammer
34 Öffnung
38 Wurzelballen
50 Feder
52 Nut
54 Feder
56 Feder
58 Nut
60 Nut
62 Feder
64 Feder
68 Feder
70 Nut
80 Hohlraum
82 Bodenwand

## Ansprüche

1. Behälter zur Aufbewahrung von Pflanzen, insbesondere für Versandzwecke, mit Kammern zur Aufnahme von Wurzelballen, die mit Öffnungen versehen sind, durch welche die bereits entwickelten Blatteile der Pflanzen ragen, **dadurch gekennzeichnet,** daß die Kammern (32) sich parallel zum Behälterboden (12) derart erstrecken, daß die Pflanzen in liegender Position gehalten sind.

2. Behälter nach Anspruch 1, dadurch gekennzeichnet, daß die Pflanzen in einander benachbarten Kammern (32) in entgegengesetzter Richtung angeordnet sind.

3. Behälter nach Anspruch 1 und 2, dadurch gekennzeichnet, daß in jeder Kammer (32) zwei Wurzelballen (38) in einander entgegengesetzter Richtung angeordnet sind.

4. Behälter nach Anspruch 1 bis 3, dadurch gekennzeichnet, daß mindestens zwei Reihen von Kammern (32) mit Abstand parallel zueinander in einer Ebene vorgesehen sind.

5. Behälter nach den Ansprüchen 1 bis 4, dadurch gekennzeichnet, daß die Kammern (32) durch Trennelemente (26) gebildet sind, die auf dem die Kammern (32) an ihrer Unterseite abschließenden Behälterboden (12) angeordnet und oberseitig durch einen Behälterdeckel (18) geschlossen sind.

6. Behälter nach den Ansprüchen 1 bis 4, dadurch gekennzeichnet, daß die Kammern (32) durch Trennelemente (26) gebildet sind, die auf einem die Kammern (32) an ihrer Unterseite abschließenden Steg (20) angeordnet sind.

7. Behälter nach Anspruch 6, dadurch gekennzeichnet, daß die Kammern (32) oberseitig durch einen Behälterdeckel (18) geschlossen sind.

8. Behälter nach Anspruch 6, dadurch gekennzeichnet, daß die Kammern (32) oberseitig durch einen darüberliegenden Steg (20) geschlossen sind.

9. Behälter nach den Ansprüchen 6 bis 8, dadurch gekennzeichnet, daß der Steg (20) an einem stapelbaren Rahmen (14,16) befestigt ist.

10. Behälter nach Anspruch 9, dadurch gekennzeichnet, daß die Rahmen (14,16) an ihrer Oberseite durch den Behälterdeckel (18) und an ihrer Unterseite durch den Behälterboden (12) abgeschlossen sind.

11. Behälter nach Anspruch 10, gekennzeichnet durch eine Feder-Nut-Verbindung zwischen dem Behälterboden (12), den Rahmen (14,16) und dem Behälterdeckel (18).

12. Behälter nach den Ansprüchen 5 und 6, dadurch gekennzeichnet, daß die Trennelemente (26) S-oder T-förmig ausgebildet sind und ihre freien Enden (30) seitliche Kammerbegrenzungen unter Bereitstellung von einander gegenüberliegend angeordneten Öffnungen (34) für den Durchtritt der Blatteile der Pflanzen bilden.

13. Behälter nach Anspruch 12, dadurch gekennzeichnet, daß die beiden freien Enden (30) des Trennelements (26) durch einen schräg zu den Blatteilen der Pflanzen verlaufenden Trennsteg (28) verbunden sind.

14. Behälter nach Anspruch 10, dadurch gekennzeichnet, daß zwischen dem Behälterboden (12) und dem Steg (20) des darüberliegenden Rahmens (14) Mittel zur Kontrolle der Temperatur angeordnet sind.

15. Behälter nach Anspruch 10, gekennzeichnet durch einen am Behälterboden (12) befestigten, am Steg (20) des darüber liegenden Rahmens (14) anliegenden Distanznocken.

16. Behälter nach einem der vorhergehenden Ansprüche, dadurch gekennzeichnet, daß der Behälter (10) aus dem Werkstoff Polystyrol besteht.

# FIG. I.

# FIG. 2.

FIG. 3.

FIG. 4.

0 288 925